# EUROPEAN PATENT SPECIFICATION

(11) **EP 4 159 944 B1**
(45) Date of publication and mention of the grant of the patent: **22.07.2026**
(21) Application number: 22199349.6
(22) Date of filing: 03.10.2022
(51) Int. Cl.: E03F 1/00

(54) **SUBTERRANEAN RAINWATER STORAGE DEVICE**
UNTERIRDISCHE REGENWASSERSPEICHERVORRICHTUNG
DISPOSITIF DE STOCKAGE D'EAU DE PLUIE SOUTERRAIN

(30) Priority: 01.10.2021 NL 2029310
(43) Date of publication of application: 05.04.2023
(73) Proprietor: Dyka B.V., 8331 LJ Steenwijk (NL)
(72) Inventor: BAIJENSE, Leendert Adrianus, 8331 LJ Steenwijk (NL); ZUURMOND, Johannes, 8331 LJ Steenwijk (NL)
(74) Representative: Arnold & Siedsma

(56) References cited:
- JP-A- 2008 031 774
- JP-B2- 5 661 392

## Description

### BACKGROUND

The invention relates to a rainwater crate for building a subterranean rainwater storage device.

A rainwater storage device comprises an inner storage body that is built up with multiple rainwater crates. The inner storage body is enclosed by an outer layer to define a rainwater storage device volume.

Such subterranean rainwater storage device is installed for the storage and buffering of large amounts of rain water during rain fall that indirectly or directly drains into the rainwater storage device. The terrain above the rainwater storage device can be implemented as any infrastructure or urban area, such as a park, a sport area or a road.
A known inner storage body comprises multiple plastic rainwater crates that are stacked onto each other. The rainwater crates are relatively voluminous and lightweight, and are therefore preferably supplied in packs wherein the rainwater crates are at least partially inserted into each other or nested to save transport space. In the design of the known rainwater crates a compromise was found between the total weight and the outer dimensions both in use and during transport. The outer dimensions in use shall be as large as possible and the total volume during transport shall be as small as possible, while a human installer still needs to be able to handle the rainwater crates on site.

### SUMMARY OF THE INVENTION

A disadvantage of the many known rainwater crates is that a human installer on site can carry the weight thereof, but they are usually shaped as a large block or square having typical dimensions of 120 centimeters x 60 centimeters x 60 centimeters whereby they may still be hard to handle. In particular it is hard to rotate the known rainwater crates after being taken from a nested pack or stack to be installed. An example thereof is disclosed in JP2008031774.

JP5661392 discloses a set of rainwater crates according to the preamble of claim 1.

It is an object of the present invention to provide a rainwater storage device having rainwater crates that can comfortably be handled by a human installer while taking the abovementioned need for optimization of the outer dimensions into account.

According to a first aspect, the invention provides a set comprising a first rainwater crate that is configured for cooperation with an identical second rainwater crate for building a subterranean rainwater storage device and further comprising said identical second rainwater crate,
wherein the first rainwater crate and the second rainwater crate each comprise a base wall and multiple supports that merge into the base wall and that project in the same direction from the base wall, wherein the supports have a distal end to stand on, and wherein the supports are hollow and have an entrance opening through the base wall at the merger with the base wall,
wherein the base wall comprises a first base wall half and a second base wall half that are consecutive to each other in a length direction of the base wall, and wherein the supports have a first distribution over the first base wall half and a second distribution over the second base wall half,
wherein the first rainwater crate has in the cooperation with the second rainwater crate a transport position and an installation position,
   wherein in the transport position the first rainwater crate is positioned straight above the second rainwater crate while the supports are nested into each other via the entrance openings,
and wherein in the installation position the first rainwater crate is unnested from the second rainwater crate and translated over half of its length with respect to the second rainwater crate in the length direction of the base wall, and the supports that merge into the first base wall half of the first rainwater crate each rest with the distal ends at least in part on the second base wall half of the second rainwater crate, or the supports that merge into the second base wall half of the first rainwater crate each rest with the distal ends at least in part on the first base wall half of the second rainwater crate, wherein in the installation position the supports that merge into the first base wall half of the first rainwater crate have at the distal ends an overlap with the supports that merge into the second base wall half of the second rainwater crate, or the supports that merge into the second base wall half of the first rainwater crate have at the distal ends an overlap with the supports that merge into the first base wall half of the second rainwater crate.

The first rainwater crate of the set according to the invention can be supplied to a building site in stacks in which the identical rainwater crates are in their mutual transport position in which they are nested into each other to minimize its transport volume. On site the nested rainwater crates can be brought into their mutual installation position by un-nesting and translating the upper rainwater crate with respect to the lower rainwater crate from which it is un-nested. This translation can be performed relatively easily in one manual operation, in particular without the need to rotate the rainwater crates for example. As the rainwater crates only need to be translated to be installed on site, a better compromise can be found between the total weight and the outer dimensions both in use and during transport. Both the dimensions and the total weight can be larger than the known rainwater crates, as the complicated rotational manipulations are not required.

In an embodiment the overlap is along the outer circumference of the support at least 20%, preferably at least 30%, most preferably at least 40% of the length of the outer circumference.

In these embodiments the supports of multiple levels of stacked rainwater crates practically form a stable vertical column in which vertical loads are transferred from the top side to the bottom side of the water storage device.

In an embodiment of the installation position the supports that merge into the first base wall half of the first rainwater crate rest aside the entrance openings in the second base wall half of the second rainwater crate, or the supports that merge into the second base wall half of the first rainwater crate rest aside the entrance openings in the first base wall half of the second rainwater crate. In this embodiment the supports of multiple levels of stacked rainwater crates practically form a stable vertical column in which vertical loads are transferred from the top side to the bottom side of the water storage device.

In an embodiment thereof the supports that merge into the first base wall half of the first rainwater crate rest adjacent to the entrance openings in the second base wall half of the second rainwater crate, or the supports that merge into the second base wall half of the first rainwater crate rest adjacent to the entrance openings in the first base wall half of the second rainwater crate. In this embodiment the supports of the multiple levels of stacked rainwater crates practically continue into each other at the entrance openings whereby a practically continuous stable vertical column is formed for optimal load transfer from the top side to the bottom side of the water storage device.

In an embodiment of the installation position the supports that merge into the first base wall half of the first rainwater crate rest fully on the second base wall half of the second rainwater crate, or the supports that merge into the second base wall half of the first rainwater crate rest fully on the first base wall half of the second rainwater crate for optimal load transfer from the supports to the base wall on which they rest.

In an embodiment the base wall of the first rainwater crate extends both in the transport position and in the installation position parallel to the base wall of the second rainwater crate while the supports are all directed in the same direction with respect to the base wall.

In an embodiment the first distribution of the supports over the first base wall half of the first rainwater crate differs from the second distribution of the supports over the second base wall half of the first rainwater crate.

This has the advantage that the first base wall half and the second base wall half can easily be distinguished, such that the correct orientation of the first rainwater crate is easily determined.

In an embodiment at least a part of the supports form identical isolated groups on a first distance from each other, wherein the supports in the isolated groups are spaced apart from each other over a second distance that is smaller than the first distance, whereby an inspection channel is formed that extend for example between the isolated groups that extend in the length direction of the first rainwater crate, or transverse thereto. The inspection channel is bridged by the base wall and thereby stable.

In an embodiment thereof the second distance is at least 1,5 times smaller than the first distance, whereby the 30 so formed inspection channels allow passage of inspection tools, such as a tethered inspection camera.

In an embodiment the supports on the first base wall half or the second base wall half form the isolated groups, and the supports on the other of the first base wall half and second base wall half have, in a projection of the first base wall half onto the second base wall half, their distal ends between the entrance openings of the supports of the isolated groups. In this embodiment the supports of multiple levels of stacked rainwater crates seen in vertical direction, are alternatingly the isolated groups and the other supports there between to form a stable vertical column in which vertical loads are transferred from the top side to the bottom side of the water storage device. This is highly advantageous because it allows the subterranean water storage device to sustain high loads, even withstanding trucks or lorries driving on top.

In an embodiment the entrance openings in the first base wall half have a larger surface area than the entrance openings in the second base wall half.

In an embodiment the first rainwater crate comprises at least four supports on the first base wall half and/or the second base wall half.

In an embodiment the first rainwater crate is symmetrical with respect to a notional first plane that extends in the length direction and perpendicular to the base wall.

Alternatively, the first rainwater crate is asymmetrical with respect to a notional first plane that extends in the length direction and perpendicular to the base wall.

In an embodiment the first rainwater crate is 25 asymmetrical with respect to a notional second plane that extends perpendicular to the length direction and perpendicular to the base wall.

In an embodiment the base wall has a rectangular circumference. The rainwater crates can thereby be installed in a cohesive half-brick relationship in which the base walls lay against each other around the circumference, which gives the subterranean rainwater storage device both strength and stiffness to support the weight of an infrastructure above the subterranean rainwater storage device.

In an embodiment the base wall has in the length direction a length that is 1,5-2,5 times, preferably 2 times its width transverse thereto.

In an embodiment the base wall has a length in the length direction of at least 0,3 meter, preferably at least 0,5 meter.

In an embodiment the supports taper toward the distal end whereby they can be nested deep into each other.

In an embodiment the supports comprise a circumferential wall that merges into the base wall and that bounds a nesting cavity.

In a preferred embodiment thereof the circumferential wall merges into a bottom wall that defines the distal end of the support.

In an embodiment the circumferential wall of at least a part of the supports has a non-circular or lobes-type cross section. This non-circular or lobes-type cross section provides sideward stability to the supports.

In an embodiment the cross section of the circumferential wall of at least a part of the supports has multiple apexes that are located on and distributed over a notional circumscribed circle, and multiple first wall sections that extend recessed from the notional circumscribe circle between subsequent apexes.

In an embodiment thereof the first wall sections are at least partly concave between the subsequent apexes. In an embodiment the circumferential wall of at least a part of the supports has in cross section multiple convex second wall sections that contain the apexes on the circumscribed circle.

In a combined embodiment the first wall sections and the second wall sections alternate along the circumference of the cross section of the circumferential wall.

In a combined embodiment the supports comprise at least four first wall sections and second wall sections, which gives stability in practically all sideward directions of the supports.

In an embodiment the supports have the same length between the base wall and the distal end.

In an embodiment the supports have a length of at least 0,15 meter.

In an embodiment of the installation position at least a part of the distal ends of the supports that merge into the first base wall half of the first rainwater crate have a circumference that runs parallel to or that follows at least in part the circumference of an entrance opening in the second base wall half of the second rainwater crate, or at least a part of the distal ends of the supports that merge into the second base wall half of the first rainwater crate have a circumference that runs parallel to or that follows at least in part the circumference of an entrance opening in the first base wall half of the second rainwater crate.

In an embodiment the base wall and/or the supports comprise a grid or grating, which provides a lightweight and water permeable rainwater crate.

In an embodiment the first rainwater crate is made of plastic.

In an embodiment the set furthermore comprises a bottom panel that defines a bottom face of the set.

In an embodiment thereof the bottom panel comprises a base wall with multiple recesses to receive the distal ends of the supports of the first rainwater crate or second rainwater crate.

In an embodiment the base wall of the bottom panel has the same circumference and dimensions as the base wall of the first rainwater crate.

In an embodiment thereof the bottom panel comprises a grid or grating, which provides a lightweight and water permeable bottom panel.

In an embodiment the bottom panel is made of plastic.

In an embodiment the set furthermore comprises a side panel that defines a side face of the set.

In an embodiment thereof the side panel comprises a grid or grating, which provides a lightweight and water permeable side panel.

In an embodiment the side panel is made of plastic.

According to a second aspect, the invention provides a subterranean rainwater storage device comprising an inner storage body and an outer layer around the inner storage body that together define a rainwater storage device volume, wherein the inner storage body comprises multiple identical rainwater crates that form a first layer and a second layer on the first layer, wherein in the first layer the rainwater crates are positioned adjacent to each other and form parallel first rows, and wherein in the second layer the rainwater crates are positioned adjacent to each other and form parallel second rows, wherein the second rows extend above the first rows, wherein the rainwater crates form sets according to the invention, and wherein in the second rows the rainwater crates are shifted with respect to the rainwater crates in the first rows over half of their length in the row direction, or wherein in the second layer at least some of the rainwater crates are rotated with respect to the rainwater crates in the first layer over 90 degrees or 180 degrees around a vertical axis.

According to a third aspect, the invention provides a method for building a subterranean rainwater storage device according to the invention, wherein the method comprises the supply of multiple sets of the rainwater crates in the mutual transport position that form a stack, wherein the first rows and the second rows are formed by repeatedly taking a rainwater crate from the stack, translating that rainwater crate in the row direction and placing that rainwater crate in the first row or the second row.

In this method it is not necessary to rotate the un-nested upper rainwater crate around a vertical axis, or to rotate the un-nested upper rainwater crate around a horizontal axis to install it aside the stack.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 is an isometric view of a building site where a subterranean rainwater storage device is build up that comprises identical bottom panels and identical rainwater crates according to a first embodiment of the invention;
Figures 2A-2D are two identical isometric views, a side view and a top view of one bottom panel and one rainwater crate of the rainwater storage device as shown in figure 1 before installation;
   Figures 3A and 3B are cross sections of the outer side of two supports of the rainwater crates of figures 2A-2D;
Figure 4 is an isometric view of a stack of nested rainwater crates of which the uppermost rainwater crate has been taken out;
Figure 5A is an isometric view of some of the installed bottom panels and rainwater crates of the rainwater storage device of figure 1;
Figure 5B is a top view of a first layer of the installed bottom panels and rainwater crates of figure 5A, and figure 5C is a detail thereof in a transparent view to show the overlapping parts, and;
Figures 6 and 7 are schematic top views of a second embodiment and a third embodiment of a rainwater crate of a set according to the invention.

### DETAILED DESCRIPTION OF THE INVENTION

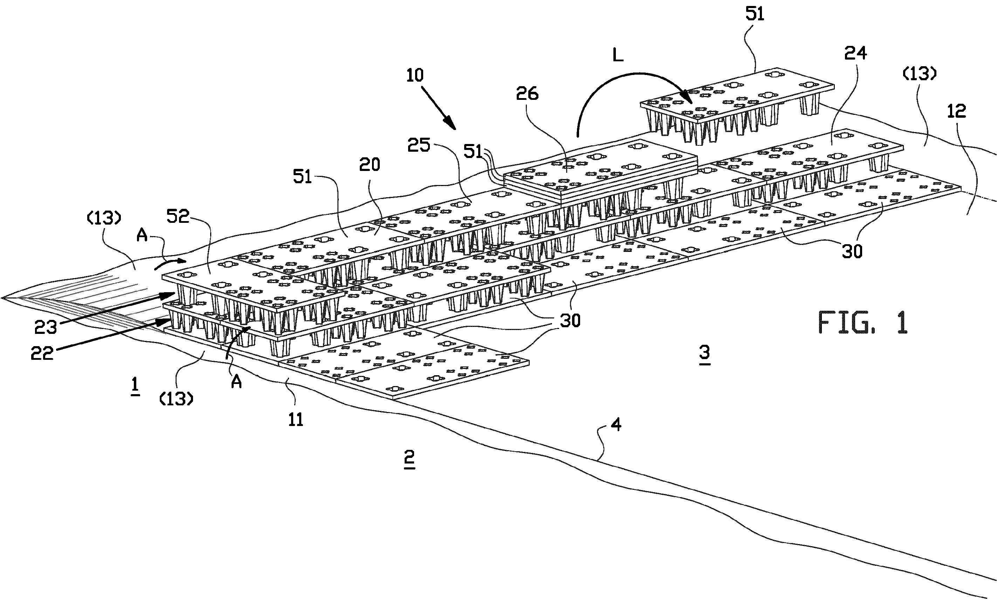

Figure 1 shows a building site where a terrain 1 with a flat, horizontal top surface 2 is provided with a subterranean rainwater storage device 10. In the terrain 1 a recess or pit is excavated having a straight, horizontal bottom surface 3 and a rectangular circumference 4. The rainwater storage device 10 comprises a plastic watertight sheet 11 that finally forms a watertight outer bottom layer 12 and four watertight outer side layers 13 of the rainwater storage device 10. The rainwater storage device 10 comprises an inner storage body 20 that comprises multiple identical bottom panels 30 that are placed on the watertight outer bottom layer 12, and multiple identical infiltration crates or stormwater crates or percolation blocks or rainwater crates 51, 52 according to a first embodiment of the invention that are placed and stacked on the bottom panels 30.

Figure 1 shows the inner storage body 20 during the building up thereof. The inner storage body 20 finally has a block-shape, giving the rainwater storage device 10 a corresponding block-shape in which the outer bottom layer 12 and the four outer side layers 13 that lay against the inner storage body 20 are all straight and have a rectangular circumference. The inner storage body 20 bounds an internal rainwater storage device volume that is closed off by the watertight sheet 11 that is installed against it.

Depending on the intended use of the rainwater storage device 10, the inner storage body 20 is covered with a plastic watertight sheet or with any kind of water permeable sheet. When the inner storage body 20 is covered with the watertight sheet, the rainwater storage device 10 forms a closed off subterranean water tank that extends parallel and below the top surface 2 of the terrain 1. When the inner storage body 20 is covered with the water permeable sheet, such as a geotextile, the rainwater storage device 10 forms a subterranean infiltration or drainage storage having a straight, horizontal top surface that extends parallel to and below the top surface 2 of the terrain. The rainwater storage device 10 is then covered with one or more filtering layers. In these examples the rainwater storage device 10 is used for the storage and buffering of large amounts of rain water during rain fall that indirectly or directly drains into the rainwater storage device 10. The terrain 1 can be implemented as any infrastructure or urban area, such as a park, a sport area or a road, wherein the rainwater storage device 10 is able to carry the weight of passing cars or trucks.

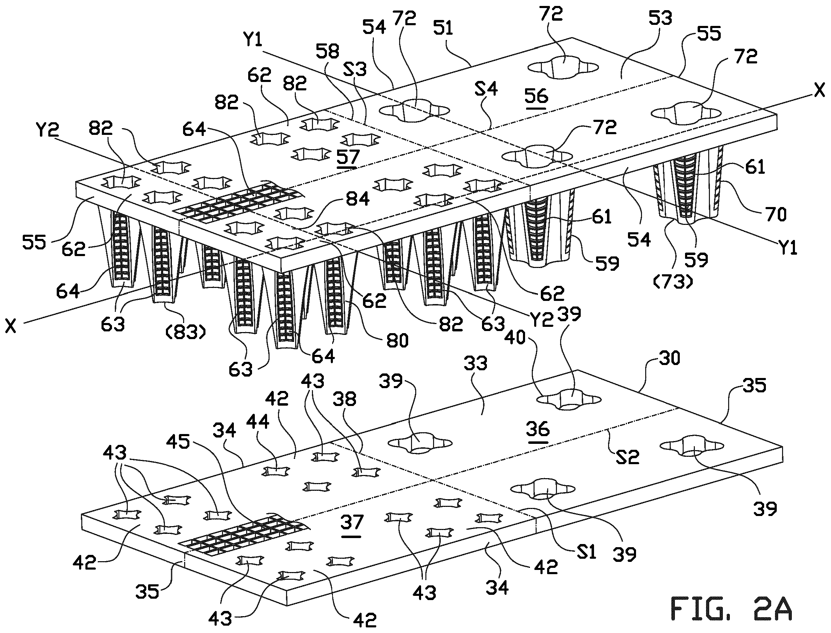

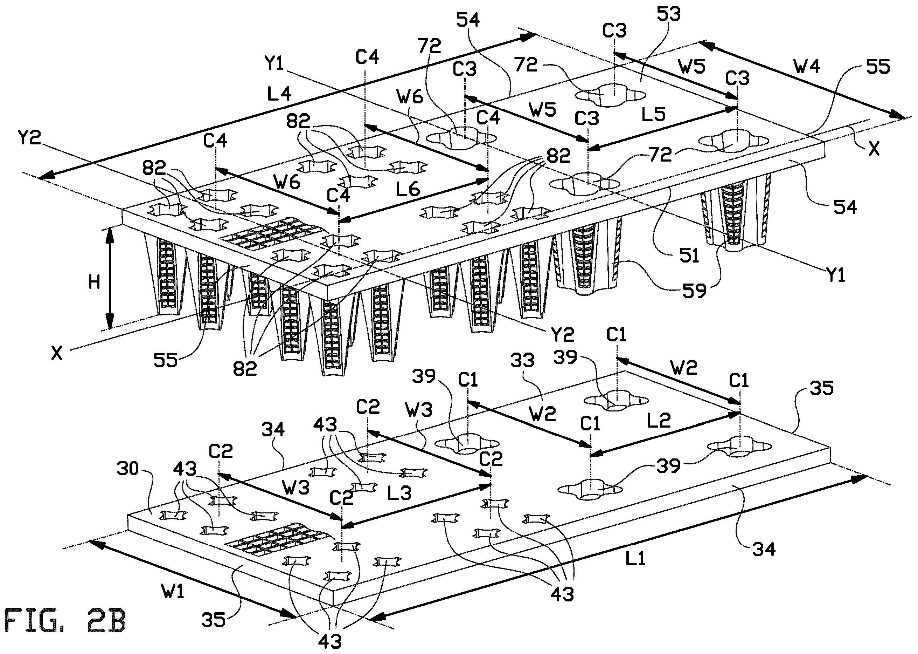

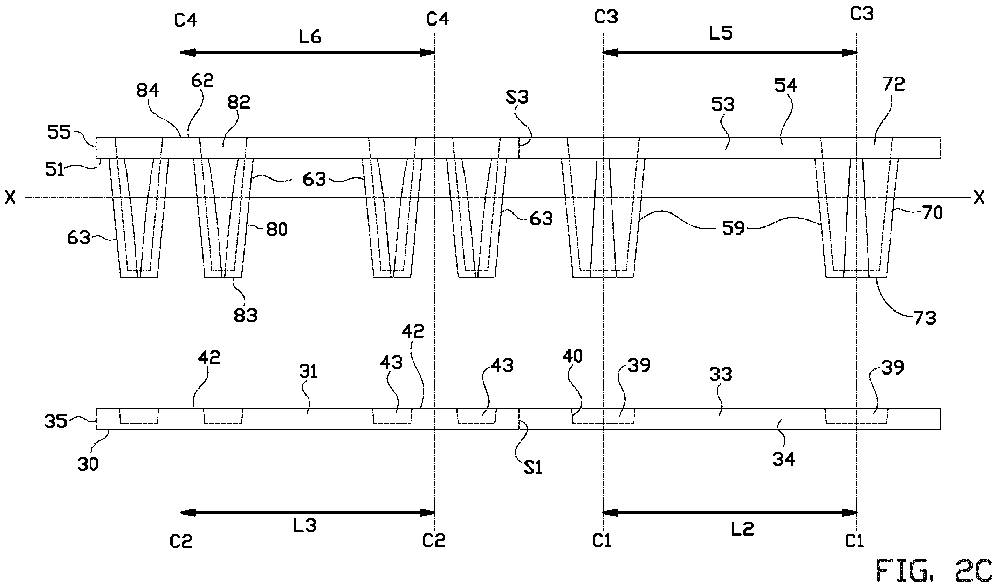

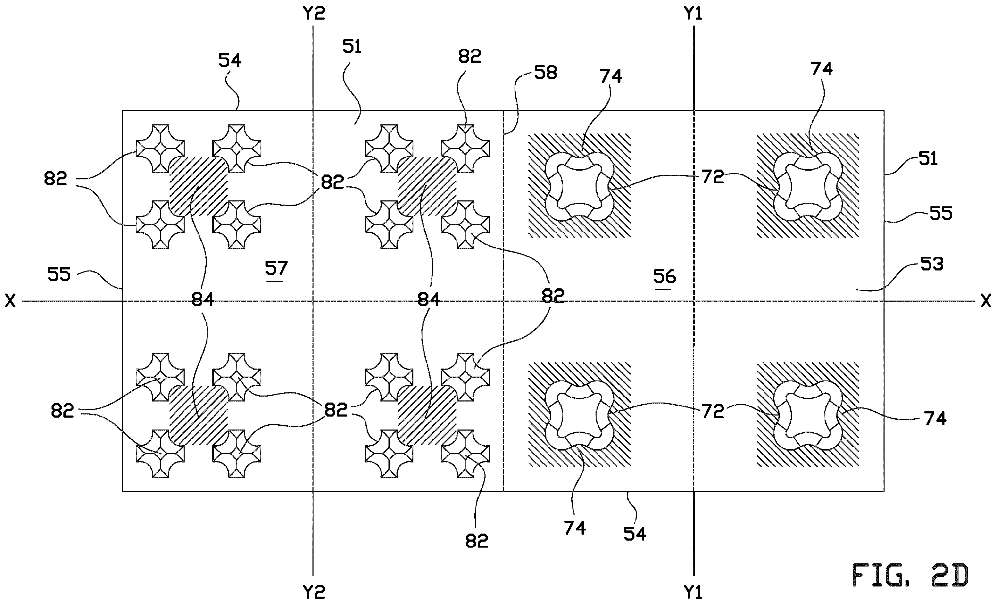

Figures 2A-2D show one bottom panel 30 and one rainwater crate 51 of the rainwater storage device 10. The bottom panel 30 comprises a base wall 33 with a pair of parallel longitudinal edges 34 and a pair of parallel transverse edges 35 that extend orthogonal to each other to define a rectangular circumference of the bottom panel 30. The transverse edges 35 have a transverse width W1 and the longitudinal edges 34 have a longitudinal length Ll that is 1,5-2,5 times, in this example twice the transverse width Wl. The longitudinal length Ll is at least 0,3 meters. The base wall 33 has any configuration that allows the bottom panel 30 to carry vertical loads, such as a solid unity or a water permeable grid or grating 45 as schematically shown for a small part thereof. The bottom panel 30 comprises a first panel portion 36 and a second panel portion 37 that are notionally divided halfway the longitudinal length Ll as indicated by a first broken line 38, giving the first panel portion 36 and the second panel portion 37 both a notional square circumference with lengths equal to the transverse width Wl. The bottom panel 30 is asymmetric with respect to a notional first plane Sl that extends through the first broken line 38 and transverse to the base wall 33. The bottom panel 30 is symmetric with respect to a notional second plane S2 that extends in the longitudinal direction through the middle and transverse to the base wall 33.

The first panel portion 36 comprises four blind first recesses 39 having their centres Cl at equal longitudinal intermediate distances L2 and equal transverse intermediate distances W2 from each other in a rectangular configuration. In this example the longitudinal intermediate distances L2 are equal to the transverse intermediate distances W2. In this example the first recesses 39 have a four-lobes-type circumference 40.

The second panel portion 37 comprises in this example four isolated groups 42 with in this example four blind second recesses 43, wherein the groups 42 have their centres C2 at equal longitudinal intermediate distances L3 and equal transverse intermediate distances W3 from each other in a rectangular configuration. In this example the longitudinal intermediate distances L3 are equal to the transverse intermediate distances W3. In this example the second recesses 43 have a four-lobes-type circumference 44.

The distances between the second recesses 43 within the isolated groups 42 is smaller than the longitudinal intermediate distances L3 and equal transverse intermediate distances W3 between the isolated groups 42.

The rainwater crate 51 comprises a base wall 53 with a pair of parallel longitudinal edges 54 and a pair of parallel transverse edges 55 that extend orthogonal to each other to define a rectangular circumference of the rainwater crate 51. The transverse edges 55 have a transverse width W4 and the longitudinal edges 54 have a longitudinal length L4 that is 1,5-2,5 times, in this example twice the transverse width W4. The longitudinal length L4 is at least 0,3 meters. The base wall 53 has any configuration that allows the rainwater crate 51 to carry vertical loads, such as a solid unity or a water permeable grid or grating 64 as schematically indicated for a small part thereof. The rainwater crate 51 comprises a first rainwater crate portion 56 and a second rainwater crate portion 57 that are notionally divided halfway the longitudinal length L4 as indicated by a second broken line 58, giving the first rainwater crate portion 56 and the second rainwater crate portion 57 both a notional square circumference with lengths equal to the transverse width W4.

The first rainwater crate portion 56 comprises four hollow first supports 59 having their centres C3 at equal longitudinal intermediate distances L5 and equal transverse intermediate distances W5 from each other in a rectangular configuration. In this example the longitudinal intermediate distances L5 are equal to the transverse intermediate distances W5. The first supports 59 project parallel to each other and all in the same direction from the base wall 53, having their centre lines orthogonal to the base wall 53. Each first support 59 comprises a circumferential wall 70 with a constant wall thickness P that at the proximal side merges into the base wall 53 where it defines a first entrance opening 72, and that tapers towards the distal end where it in this example merges into a bottom wall 73, but the distal end may also be open. The circumferential wall 70 has any configuration that allows the rainwater crate 51 to carry vertical loads, such as a solid unity or a water permeable grid or grating 61 as schematically indicated for a small part thereof. The base wall 53 defines first support areas 74 around the first entrance openings 72 that are adjacent to the first entrance openings 72. The circumferential wall 70 and the bottom wall 73 have at their merger an outer shape and outer dimensions such that the distal end mates with and tightly fits inside the first recesses 39 of the bottom panel 30. In this example the hollow first supports 59 have a four-lobes-type cross section.

The second rainwater crate portion 57 comprises in this example four isolated groups 62 of in this example four hollow second supports 63 having their centres C4 at equal longitudinal intermediate distances L6 and equal transverse intermediate distances W6 from each other in a rectangular configuration. The isolated groups 62 have in this example four second supports 63 and alternatively formulated the isolated groups 62 have at least two second supports 63, and preferably at least three second supports 63. There are no second supports 63 present between the isolated groups 62. In this example the longitudinal intermediate distances L6 are equal to the transverse intermediate distances W6. The distances between the centre lines of the second supports 63 within the isolated groups 62 is at least 1,5 times smaller than the longitudinal intermediate distances L6 and equal transverse intermediate distances W6 between the isolated groups 62. This applies both for the distances between the centre lines of the second supports 63 that are subsequent to each other and for the distances between the centre line of the second supports 63 that are diagonal to each other within the isolated group 62. The second hollow supports 63 project parallel to each other and all in the same direction from the base wall 53. Each second support 63 comprises a circumferential wall 80 with the constant wall thickness P that at the proximal side merges into the base wall 53 where it defines a second entrance opening 82, and that taper towards the distal end where it in this example merges into a bottom wall 83, but the distal end may also be open. The circumferential wall 80 has any configuration that allows the rainwater crate 51 to carry vertical loads, such as a solid unity or a water permeable grid or grating 64 as schematically indicated for a small part thereof. The second entrance openings 82 within each group 62 are spaced apart from each other to bound second support areas 84 of the base wall 53 in between that are adjacent to the entrance openings 82. The circumferential wall 80 and the bottom wall 83 have at their merger an outer shape and outer dimensions such that the distal end mates with and tightly fits inside the second recesses 43 of the bottom panel 30. In this example the second hollow supports 63 have a four-lobes-type cross section.

The rainwater crate 51 is asymmetric with respect to a notional third plane S3 that extends through the second broken line 58 and transverse to the base wall 53. The rainwater crate 51 is symmetric with respect to a notional fourth plane S4 that extends in the longitudinal direction through the middle and transverse to the base wall 53. The third notional plane S3 divides the base wall 53 in a first base wall half of the first rainwater crate portion 56 and a second base wall half of the second rainwater crate portion 57.

The longitudinal length Ll and the transverse width W1 of the bottom panel 30 are equal to respectively the longitudinal length L4 and the transverse width W4 of the rainwater crate 51. The longitudinal intermediate distances L2, L3 of the bottom panel 30 and the longitudinal intermediate distances L5, L6 of the rainwater crate 51 are equal to each other, and the transverse intermediate distances W2, W3 of the bottom panel 30 and the transverse intermediate distances W5, W6 of the rainwater crate 51 are equal to each other. The outer dimensions of the second support areas 84 are equal to or larger than the outer dimensions of the distal ends or of the bottom wall 73 of the first supports 59.

The first support areas 74 and the second support areas 84 are adjacent to the respective first supports 59 and second supports 63 to allow a vertical load onto the base wall 53 to be vertically transferred onto the first supports 59 and second supports 63. The first supports 59 and second supports 63 all have the same length H of at least 0,15 meters.

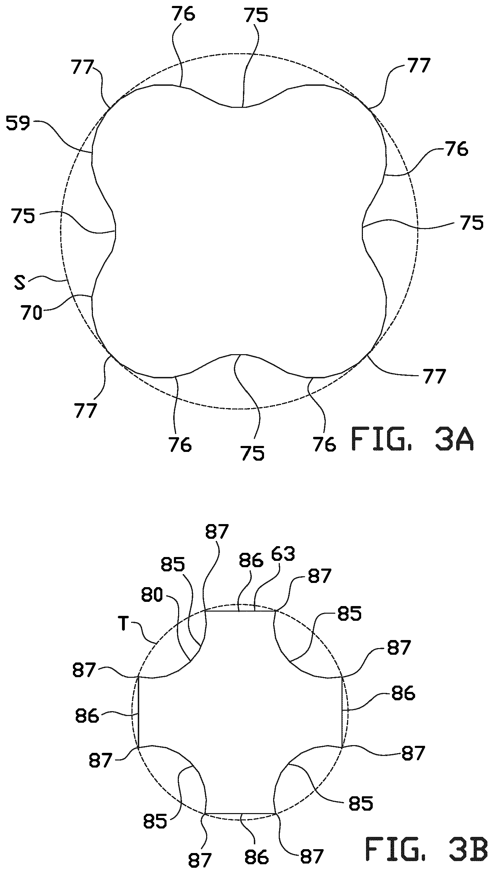

Figures 3A and 3B are cross sections of the first supports 59 and second supports 63, showing the outer circumference of the circumferential walls 70, 80 at their merger with the base wall 53. The circumferential wall 70 of the first supports 59 comprise in this example four concave first wall sections 75 that symmetrically merge on both sides into four convex second wall sections 76 having apexes 77 on a first circumscribed circle S of the circumferential wall 70. The circumferential wall 80 of the second supports 63 comprise in this example four concave first wall sections 85 having end edges that form apexes 87 on a second circumscribed circle T of the circumferential wall 70. The circumferential wall 70 comprises four straight second wall sections 86 between the apexes 87.

The diameter of the first circumscribed circle S of the first supports 59 at their merger with the base wall 53 is at least 1,5 times smaller than the longitudinal intermediate distances L5 and the transverse intermediate distances W5 between the centre lines or centres C3 of the first supports 59. The longitudinal intermediate distances L6 and the transverse intermediate distances W6 between the isolated groups 62 of second supports ensures a proper and equally distributed overlap with the first supports 59 as discussed hereafter. In this manner in the rainwater crate 51 a first longitudinal inspection channel X is formed between the first supports 59 and the isolated groups 62 of the second supports 63 that extends through the notional fourth plane S4, which longitudinal inspection channel X has a transverse width that is larger than the distance between the directly adjacent first supports 59 and second supports 63 of two rainwater crates 51 that are positioned with their longitudinal edges 54 parallel and against each other. In the same manner is in the rainwater crate 51 a first transverse inspection channel Yl formed between the first supports 59, and a second transverse inspection channel Y2 is formed between the isolated groups 62 of second supports 63. The first transverse inspection channel Yl and the second transverse inspection channel Y2 both extend parallel to the notional third plane S3 and have a transverse width that is larger than the distance between the directly adjacent first supports 59 and second supports 63 of two rainwater crates 51 that are positioned with their transverse edges 55 parallel and against each other. The transverse width of the longitudinal inspection channel X and the first transverse inspection channel Yl and the second transverse inspection channel Y2 is larger than 25% of the transverse width W4 of the transverse edges 55 of the base wall 53. The inspection channels X, Yl, Y2 allow the passage of inspection tools through the rainwater storage device 10, for example tethered camera robots or cleaning robots. The base wall 53 bridges the inspection channels X, Yl, Y2.

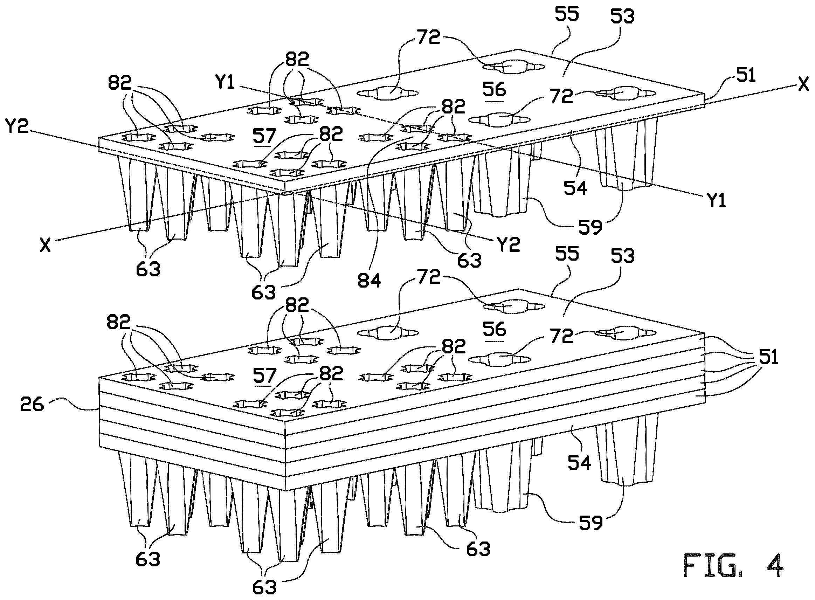

Figure 4 shows a stack 26 of multiple rainwater crates 51, wherein the first supports 59 and the second supports 63 are nested into each other and the base walls 53 lay onto each other. The stack 26 thereby forms one unity that can easily be carried by one or two human installers. As shown, the uppermost rainwater crate 51 can easily be unstacked by lifting it vertically from the remainder of the stack 26.

The bottom panels 30 may be provided with not shown interlocking means at the longitudinal edges 34 and transverse edges 35, for example protrusions that project from these edges and that are enclosed in corresponding recesses at the edges of the adjacent bottom panel 30 to couple the bottom panels 30 to each other. The rainwater crates may be provided with not shown interlocking means at the longitudinal edges 54 and transverse edges 55, for example protrusions that project from these edges and that are enclosed in corresponding recesses at the edges of the adjacent rainwater crate 51 to couple the rainwater crates to each other.

The bottom panel 30, the rainwater crate 51 and the not shown side panels are made of a plastic, in particular a thermoplastic resin, such as polyethylene (PE), polypropylene (PP) or polyvinylchloride (PVC). The bottom panel 30, the rainwater crate 51 and the side panels are for example made by means of injection moulding. When the rainwater storage device 10 is installed, the watertight sheet 11 is placed onto the flat bottom surface 30 and subsequently the bottom panels 30 are laid down adjacent to each other and optionally interlocked to form parallel rows. In this example the elongate bottom panels 30 extend in the row direction. The bottom panels 30 can be laid down in one operation to form the entire rectangular bottom side of the rainwater storage device 20, or the bottom panels 30 are laid down progressively together with the installation of the rainwater crates 51, 52 to end up with the rectangular bottom side of the rainwater storage device 20.

The rainwater crates 51, 52 are supplied as the stacks 26 of nested rainwater crates 51, 52 as shown in figure 4. The number of nested rainwater crates 51, 52 per stack 26 depends on the total weight that can be comfortably carried by one or two human installers, for example up to five stacked rainwater crates 51, 52.

As shown in figure 1, the stack 26 is placed straight above one of the bottom panels 30, wherein the distal ends of the first supports 59 and the second supports 63 of the lowermost rainwater crate 51, 52 of the stack enter the respective first recesses 39 and second recesses 43.

Subsequently a first row 24 of rainwater crates 51 is formed by lifting and separating the uppermost rainwater crate 51 from its stack 26, and translating it in a direction L parallel to the length of the first row 24 to place it in front of the stack 26. This is repeated to form a first layer 22 with multiple parallel first rows 24 of rainwater crates 51. A second layer 23 of rainwater crates 51 is formed above the first layer 22 of rainwater crates 51 in the same way by forming multiple parallel second rows 25 straight above the first rows 24, wherein the rainwater crates 51 in the second row 25 are shifted with respect to the rainwater crates 51 in the first row 24 that is straight below over half of their length in the row direction. In this manner the distal ends of the first supports 59 each and all stand on the second support areas 84 of a rainwater crate 51 of the first layer 22, and the distal ends of the second supports 63 each and all stand on the first support areas 74 of a rainwater crate 51 of the first layer 22.

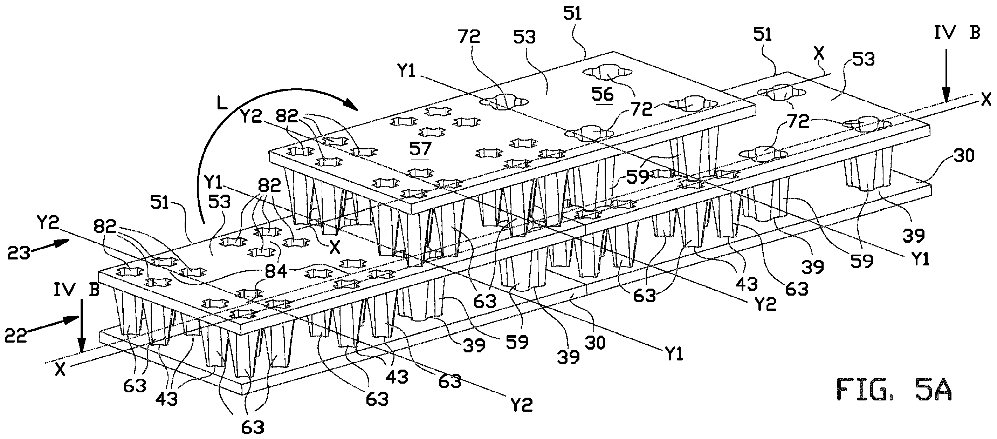

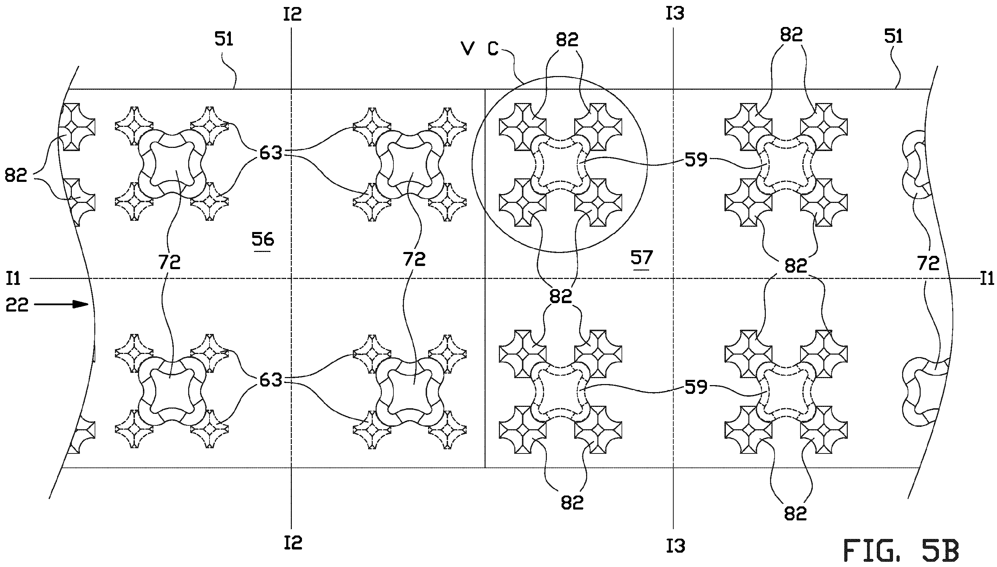

Figure 5A shows two rainwater crates 51 in the first layer 22 and one rainwater crate 51 in the second layer 23. Figure 5B is a top view of the base walls 53 of the rainwater crates 51 in the first layer 22, wherein with broken lines the distal ends of the first supports 59 and the second supports 63 of the rainwater crate 51 in the second layer 23 are illustrated. As shown, the outer circumference of the distal ends follows at least in part the circumference of the support areas 74, 84 adjacent to the first entrance openings 72 and second entrance openings 82 for optimal vertical transfer of the vertical loads.

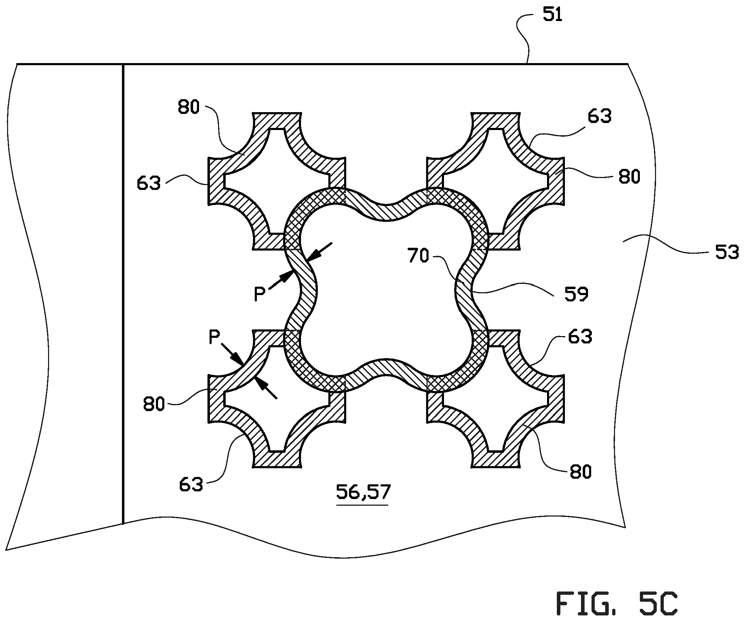

Figure 5C notionally shows the cross section of the circumferential wall 70 of one first support 59 at its bottom wall 83, and the cross sections of the circumferential walls 80 of one isolated group 62 of the second supports 63 at the merger with their base wall 53 where the first support 59 stands on the second support area 84 to form a stable vertical column for load transfer. For all first supports 59 and second supports 63 applies that they are distributed such that the first supports 59 have in the circumferential direction, so along the circumference of the first circumferential wall 70, at least 20%, preferably at least 30%, most preferably at least 40% of the length as overlap with the second supports 63. The local width of the overlap transverse to the circumferential direction is at least 20%, preferably at least 30%, most preferably at least 40% of the wall thickness P of the circumferential walls 70, 80.

As the rainwater crates 51 of the second rows 25 are shifted over half of their length in the row direction and are supported by two rainwater crates 51 in the first rows 24, the second rows 25 are shorter over one length of a rainwater crate 51. Per two adjacent second rows 25, one rainwater crate 52 is rotated around a vertical axis over just 90 degrees and placed transverse to the two second rows 25 to accomplish the block-shape of the finished rainwater storage device 20. In order to allow the closing building blocks 52 along the edges to be supported by the rainwater crates 52 of the first layer 22, the rainwater crates 51 in the subsequent adjacent first rows 24 are alternating opposite oriented, wherein the first rainwater crate portions 56 and the second rainwater crate portions 57 lay reversed around their vertical axis. When the block-shaped inner storage body 20 is fully build up, the watertight sheet 11 is turned up in direction A and placed against the inner storage body 20 to form the four outer side layers 13 of the rainwater storage device 10.

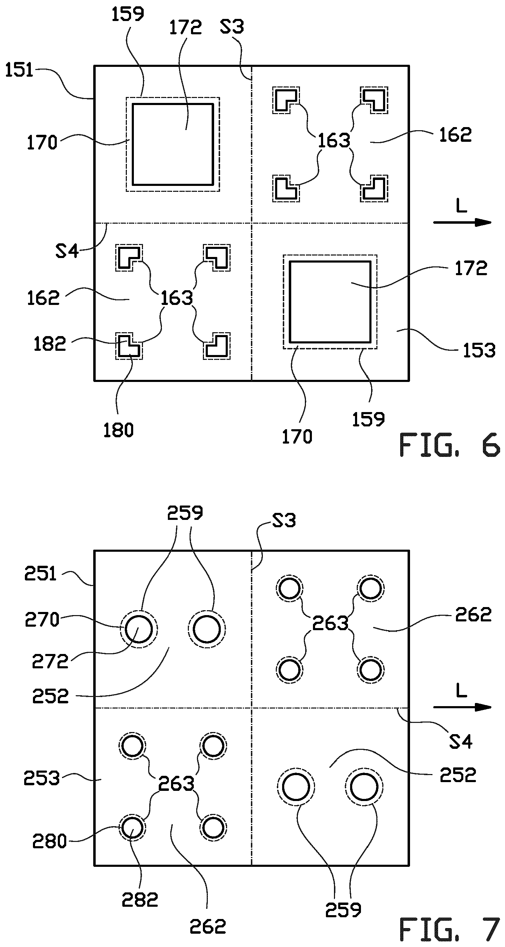

Figure 6 shows a schematic top view of a rainwater crate 151 of a set according to a second embodiment of the invention.

Only the features that differ from the first embodiment are hereafter discussed. The rainwater crate 151 comprises a base wall 153 with a rectangular circumference as in the first embodiment, having a square circumference instead of a rectangular circumference. The rainwater crate 151 comprises in this example two hollow first supports 159 having a circumferential wall 170 with a constant wall thickness that at the proximal side merges into the base wall 153 where it defines the first entrance opening 172, and that tapers towards the distal end. The rainwater crate 151 comprises in this example two isolated groups 162 of in this example four hollow second supports 163 having a circumferential wall 180 with a constant wall thickness that at the proximal side merges into the base wall 153 where it defines the second entrance opening 182, and that tapers towards the distal end. In the second embodiment, the circumferential walls 170 of the first supports 159 have a square circumference in their cross section, wherein the circumferential walls 180 of the second supports have a generally square cross section including a recess that faces the center of the isolated group 162 and that corresponds with the projection of the circumference of the circumferential wall of the first supports 159, whereby the first supports 159 and the second supports 163 are complementary when stacked onto each other and at least partially follow the circumference of the other.

The rainwater crate 151 of the set according to the second embodiment is asymmetric with respect to the notional third plane S3 and the notional fourth plane S4. The third notional plane S3 divides the base wall 153 in the first base wall half and the second base wall half that are consecutive in the translation direction L.

In a not shown alternative, the two hollow first supports 159 are all located one side of the third notional plane S3, while the two isolated groups 162 of four hollow second supports 163 are all located at the opposite side of the third notional third plane S3, whereby it is symmetrical with respect to the notional fourth plane S4. The number of first supports 159 corresponds to the number of isolated groups 162 of hollow second supports, which can be any number above two.

Figure 7 shows a schematic top view of a rainwater crate 251 of a set according to a third embodiment of the invention.

Only the features that differ from the first embodiment are hereafter discussed. The rainwater crate 251 comprises a base wall 253 with a rectangular circumference as in the first embodiment, having a square circumference instead of a rectangular circumference. The rainwater crate 251 comprises in this example two isolated groups 252 of hollow first supports 259 having a circumferential wall 270 with a constant wall thickness that at the proximal side merges into the base wall 253 where it defines the first entrance opening 272, and that tapers towards the distal end. The rainwater crate 251 comprises in this example two isolated groups 262 of in this example four hollow second supports 263 having a circumferential wall 280 with a constant wall thickness that at the proximal side merges into the base wall 253 where it defines the second entrance opening 282, and that tapers towards the distal end. In the third embodiment, the circumferential walls 270, 280 both have a circular circumference in their cross section. The rainwater crate 251 of the set according to the third embodiment is asymmetric with respect to the notional third plane S3 and the notional fourth plane S4. The third notional plane S3 divides the base wall 253 in the first base wall half and the second base wall half that are consecutive in the translation direction L.

Essentially, as shown in figures 4, 5A and 5B for the first embodiment, but also applicable for the second embodiment and third embodiment, two stacked and nested rainwater crates 51 are un-nested and the upper rainwater crate 51 is translated in direction L in the row direction over half of its length where after it stands on half of the lower rainwater crate 51 from which it is un-nested. This is a pure translation in direction L. It is not necessary to rotate the un-nested upper rainwater crate 51 around a vertical axis, or to rotate the un-nested upper rainwater crate 51 around a horizontal axis, which are both quite unhandy or hard maneuvers for human installers. The translation can be performed relatively easy, as the human installer can grab the upper rainwater crate vertically by hand and step aside while keeping the rainwater crate 51 in the hands. The second embodiment and the third embodiment also work when the rainwater crate 151, 251 is rotated over 180 degrees around a vertical axis.

It is to be understood that the above description is included to illustrate the operation of the preferred embodiments and is not meant to limit the scope of the invention. From the above discussion, many variations will be apparent to one skilled in the art that would yet be encompassed by the scope of the present invention as defined by the appended claims.

## Claims

1. Set comprising a first rainwater crate (51) that is configured for cooperation with an identical second rainwater crate for building a subterranean rainwater storage device (10) and further comprising said identical second rainwater crate (51),
wherein the first rainwater crate and the second rainwater crate each comprise a base wall (53) and multiple supports (59, 63) that merge into the base wall and that project in the same direction from the base wall, wherein the supports have a distal end to stand on, and wherein the supports are hollow and have an entrance opening (72, 82) through the base wall (53) at the merger with the base wall (53),
wherein the base wall comprises a first base wall half (56) and a second base wall half (57) that are consecutive to each other in a length direction of the base wall, and wherein the supports (59, 63) have a first distribution over the first base wall half (56) and a second distribution over the second base wall half (57),
wherein the first rainwater crate (51) has in the cooperation with the second rainwater crate (51) a transport position and an installation position,
wherein in the transport position the first rainwater crate (51) is positioned straight above the second rainwater crate (51) while the supports (59, 63) are nested into each other via the entrance openings (72, 82), and wherein in the installation position the first rainwater crate (51) is unnested from the second rainwater crate (51) and translated over half of its length with respect to the second rainwater crate in the length direction of the base wall (53), and the supports (59) that merge into the first base wall half (56) of the first rainwater crate each rest with the distal ends at least in part on the second base wall half (57) of the second rainwater crate, or the supports (63) that merge into the second base wall half (57) of the first rainwater crate each rest with the distal ends at least in part on the first base wall half (56) of the second rainwater crate, **characterized in that** in the installation position the supports (59) that merge into the first base wall half (56) of the first rainwater crate (51) have at the distal ends an overlap with the supports (63) that merge into the second base wall half (57) of the second rainwater crate (51), or the supports (63) that merge into the second base wall half (57) of the first rainwater crate (51) have at the distal ends an overlap with the supports (59) that merge into the first base wall half (56) of the second rainwater crate (51).

2. Set according to claim 1, wherein the overlap is along the outer circumference of the support (59, 63) at least 20%, preferably at least 30%, most preferably at least 40% of the length of the outer circumference.

3. Set according to any one of the preceding claims, wherein in the installation position the supports (59) that merge into the first base wall half (56) of the first rainwater crate (51) rest aside or adjacent to the entrance openings (82) in the second base wall half (57) of
the second rainwater crate (51), or the supports (63) that merge into the second base wall half (57) of the first rainwater crate (51) rest aside or adjacent to the entrance openings (72) in the first base wall half (56) of the second rainwater crate (51).

4. Set according to any one of the preceding claims, wherein in the installation position the supports (59) that merge into the first base wall half (56) of the first rainwater crate (51) rest fully on the second base wall half (57) of the second rainwater crate (51), or the supports (63) that merge into the second base wall half (57) of the first rainwater crate (51) rest fully on the first base wall half (56) of the second rainwater crate (51).

5. Set according to any one of the preceding claims, wherein both in the transport position and in the installation position the base wall (53) of the first rainwater crate (51) extends parallel to the base wall (53) of the second rainwater crate (51) while the supports (59, 63) are all directed in the same direction with respect to the base wall (53).

6. Set according to any one of the preceding claims, wherein the first distribution of the supports (59) over the first base wall half (56) of the first rainwater crate (51) differs from the second distribution of the supports (63) over the second base wall half (57) of the first rainwater crate (51).

7. Set according to any one of the preceding claims, wherein at least a part of the supports (63) form identical isolated groups (62) on a first distance (L6, W6) from each other, wherein the supports (63) in the isolated groups (62) are spaced apart from each other over a second distance that is smaller than the first distance (L6, W6), wherein preferably the second distance is at least 1,5 times smaller than the first distance (L6, W6).

8. Set according claim 7, wherein the supports (59) on the first base wall half (56) or the second base wall half (57) form the isolated groups, and the supports (59) on the other of the first base wall half (56) and second base wall half (57) have, in a projection of the first base wall half (56) onto the second base wall half (57), the distal ends between the entrance openings (82) of the supports (63) of the isolated groups (62).

9. Set according to any one of the preceding claims, wherein the base wall (53) has a rectangular circumference, wherein preferably the base wall (53) has in the length direction a length (L4) that is 1,5-2,5 times, preferably 2 times its width (W4) transverse thereto.

10. Set according to any one of the preceding claims, wherein the supports (59, 63) comprise a circumferential wall (70, 80) that merges into the base wall (53) and that bounds a nesting cavity, wherein preferably the circumferential wall (70, 80) merges into a bottom wall (73, 83) that defines the distal end of the support.

11. Set according to claim 10, wherein the circumferential wall (70, 80) of at least a part of the supports (59, 63) has a non-circular or lobes-type cross section, and/or wherein the cross section of the circumferential wall (70, 80) of at least a part of the supports (59, 63) has multiple apexes (77, 87) that are located on and distributed over a notional circumscribed circle (S, T), and multiple first wall sections (75, 85) that extend recessed from the notional circumscribe circle between subsequent apexes, wherein preferably the first wall sections (75, 85) are at least partly concave between the subsequent apexes (77, 87), wherein preferably the circumferential wall (70) of at least a part of the supports (59) has in cross section multiple convex second wall sections (76) that contain the apexes (77) on the circumscribed circle, wherein preferably the first wall sections (75) and the second wall sections (76) alternate along the circumference of the cross section of the circumferential wall.

12. Set according to any one of the preceding claims, wherein in the installation position at least a part of the distal ends of the supports (59) that merge into the first base wall half (56) of the first rainwater crate (51) have a circumference that runs parallel to or that follows at least in part the circumference of an entrance opening (82) in the second base wall half (57) of the second rainwater crate, or at least a part of the distal ends of the supports (63) that merge into the second base wall half (57) of the first rainwater crate (51) have a circumference that runs parallel to or that follows at least in part the circumference of an entrance opening (72) in the first base wall half (56) of the second rainwater crate (51).

13. Set according to any one of the preceding claims, furthermore comprising a bottom panel (30) that defines a bottom face of the set, wherein the bottom panel preferably comprises a base wall (33) with multiple recesses (39, 43) to receive the distal ends of the supports (59, 63) of the first rainwater crate (51) or second rainwater crate (51).

14. Subterranean rainwater storage device (10) comprising an inner storage body (20) and an outer layer (11) around the inner storage body that together define a rainwater storage device volume, wherein the inner storage body (20) comprises multiple identical rainwater crates (51) that form a first layer (22) and a second layer (23) on the first layer, wherein in the first layer (22) the rainwater crates (51) are positioned adjacent to each other and form parallel first rows (24), and wherein in the second layer (23) the rainwater crates (51) are positioned adjacent to each other and form parallel second rows (25), wherein the second rows (25) extend above the first rows (24), wherein the rainwater crates (51) form sets according to any one of the preceding claims, and wherein in the second rows (25) the rainwater crates (51) are shifted with respect to the rainwater crates (51) in the first rows (24) over half of their length in the row direction, or wherein in the second layer (23) at least some of the rainwater crates (52) are rotated with respect to the rainwater crates (51) in the first layer (22) over 90 degrees or 180 degrees around a vertical axis.

15. Method for building a subterranean rainwater storage device (10) according to claim 14, wherein the method comprises the supply of multiple sets of the rainwater crates (51) in the mutual transport position that form a stack (26),
wherein the first rows (24) and the second rows (25) are formed by repeatedly taking a rainwater crate (51) from the stack (26), translating that rainwater crate (51) in the row direction and placing that rainwater crate (51) in the first row (24) or the second row (25).

## Patentansprüche

1. Set mit einer ersten Regenwasserkiste (51) die dazu ausgebildet ist, mit einer identischen zweiten Regenwasserkiste zum Aufbau einer unterirdischen Regenwasserspeichervorrichtung (10) zusammenzuwirken, und weiter umfasst es diese identische zweite Regenwasserkiste (51), wobei die erste Regenwasserkiste und die zweite Regenwasserkiste jeweils eine Bodenwand (53) und mehrere Stützen (59, 63) umfassen, die in die Bodenwand übergehen und sich in gleicher Richtung von der Bodenwand erstrecken, wobei die Stützen distale Enden zum Aufstehen aufweisen und wobei die Stützen hohl sind und an der Übergangsstelle zur Bodenwand (53) eine Öffnung (72, 82) durch die Bodenwand (53) aufweisen, wobei die Bodenwand eine erste Bodenwandhälfte (56) und eine zweite Bodenwandhälfte (57) umfasst, die in einer Längsrichtung der Bodenwand aufeinanderfolgend angeordnet sind, und wobei die Stützen (59, 63) eine erste Verteilung über die erste Bodenwandhälfte (56) und eine zweite Verteilung über die zweite Bodenwandhälfte (57) aufweisen, wobei die erste Regenwasserkiste (51) in der Zusammenarbeit mit der zweiten Regenwasserkiste (51) eine Transportposition und eine Einbauposition einnimmt, wobei in der Transportposition die erste Regenwasserkiste (51) direkt oberhalb der zweiten Regenwasserkiste (51) positioniert ist, während die Stützen (59, 63) über die Eintrittsöffnungen (72, 82) ineinander verschachtelt sind, und wobei in der Einbauposition die erste Regenwasserkiste (51) aus der Verschachtelung mit der zweiten Regenwasserkiste (51) gelöst und über die Hälfte seiner Länge gegenüber der zweiten Regenwasserkiste in Längsrichtungder Bodenwand (53) übersetzt ist, und die in die erste Bodenwandhälfte (56) der ersten Regenwasserkiste übergehenden Stützen (59) liegen jeweils mit ihren distalen Enden zumindest teilweise auf der zweiten Bodenwandhälfte (57) der zweiten Regenwasserkiste, oder die in die zweite Bodenwandhälfte (57) der ersten Regenwasserkiste übergehenden Stützen (63) liegen jeweils mit ihren distalen Enden zumindest teilweise auf der ersten Bodenwandhälfte (56) der zweiten Regenwasserkiste, **dadurch gekennzeichnet, dass** in der Einbauposition die Stützen (59), die in die erste Bodenwandhälfte (56) der ersten Regenwasserkiste (51) übergehen, an ihren distalen Enden eine Überlappung mit den Stützen (63) aufweisen, die in die zweite Bodenwandhälfte (57) der zweiten Regenwasserkiste (51) übergehen, oder dass die Stützen (63), die in die zweite Bodenwandhälfte (57) der ersten Regenwasserkiste (51) übergehen, an ihren distalen Enden eine Überlappung mit den Stützen (59) aufweisen, die in die erste Bodenwandhälfte (56) der zweiten Regenwasserkiste (51) übergehen.

2. Set nach Anspruch 1, wobei die Überlappung entlang des äußeren Umfangs der Stütze (59, 63) mindestens 20 %, vorzugsweise mindestens 30 %, besonders bevorzugt mindestens 40 % der Länge des äußeren Umfangs beträgt.

3. Set nach einem der vorhergehenden Ansprüche, wobei in der Einbauposition die Stützen (59), die in die erste Bodenwandhälfte (56) der ersten Regenwasserkiste (51) übergehen, seitlich oder angrenzend zu den Eintrittsöffnungen (82) in der zweiten Bodenwandhälfte (57) der zweiten Regenwasserkiste (51) aufliegen, oder wobei die Stützen (63), die in die zweite Bodenwandhälfte (57) der ersten Regenwasserkiste (51) übergehen, seitlich oder angrenzend zu den Eintrittsöffnungen (72) in der ersten Bodenwandhälfte (56) der zweiten Regenwasserkiste (51) aufliegen.

4. Set nach einem der vorhergehenden Ansprüche, wobei in der Einbauposition die Stützen (59), die in die erste Bodenwandhälfte (56) der ersten Regenwasserkiste (51) übergehen, vollständig auf der zweiten Bodenwandhälfte (57) der zweiten Regenwasserkiste (51) aufliegen, oder wobei die Stützen (63), die in die zweite Bodenwandhälfte (57) der ersten Regenwasserkiste (51) übergehen, vollständig auf der ersten Bodenwandhälfte (56) der zweiten Regenwasserkiste (51) aufliegen.

5. Set nach einem der vorhergehenden Ansprüche, wobei sowohl in der Transportposition als auch in der Einbauposition die Bodenwand (53) der ersten Regenwasserkiste (51) parallel zur Bodenwand (53) der zweiten Regenwasserkiste (51) verläuft, während alle Stützen (59, 63) in gleicher Richtung relativ zur Bodenwand (53) ausgerichtet sind.

6. Set nach einem der vorhergehenden Ansprüche, wobei sich die erste Verteilung der Stützen (59) über die erste Bodenwandhälfte (56) der ersten Regenwasserkiste (51) von der zweiten Verteilung der Stützen (63) über die zweite Bodenwandhälfte (57) der ersten Regenwasserkiste (51) unterscheidet.

7. Set nach einem der vorhergehenden Ansprüche, wobei zumindest ein Teil der Stützen (63) identische, isolierte Gruppen (62) bildet, die in einem ersten Abstand (L6, W6) voneinander angeordnet sind, wobei die Stützen (63) innerhalb der isolierten Gruppen (62) in einem zweiten Abstand voneinander angeordnet sind, der kleiner ist als der erste Abstand (L6, W6), wobei der zweite Abstand vorzugsweise mindestens 1,5-mal kleiner ist als der erste Abstand (L6, W6).

8. Set nach Anspruch 7, wobei die Stützen (59) auf der ersten Bodenwandhälfte (56) oder der zweiten Bodenwandhälfte (57) die isolierten Gruppen bilden, und die Stützen (59) auf der jeweils anderen der ersten Bodenwandhälfte (56) und der zweiten Bodenwandhälfte (57) in einer Projektion der ersten Bodenwandhälfte (56) auf die zweite Bodenwandhälfte (57) mit ihren distalen Enden zwischen den Eintrittsöffnungen (82) der Stützen (63) der isolierten Gruppen (62) angeordnet sind.

9. Set nach einem der vorhergehenden Ansprüche, wobei die Bodenwand (53) einen rechteckigen Umfang aufweist, wobei die Bodenwand (53) in der Längsrichtung vorzugsweise eine Länge (L4) aufweist, die 1,5- bis 2,5 mal, vorzugsweise etwa 2 mal, ihrer dazu quer verlaufenden Breite (W4) entspricht.

10. Set nach einem der vorhergehenden Ansprüche, wobei die Stützen (59, 63) eine Umfangswand (70, 80) umfassen, die in die Bodenwand (53) übergeht und einen Verschachtelungsraum begrenzt, wobei die Umfangswand (70, 80) vorzugsweise in eine Bodenwand (73, 83) übergeht, die das distale Ende der Stütze definiert.

11. Set nach Anspruch 10, wobei die Umfangswand (70, 80) von zumindest einem Teil der Stützen (59, 63) einen nicht-kreisförmigen oder lappenförmigen Querschnitt aufweist, und/oder wobei der Querschnitt der Umfangswand (70, 80) von zumindest einem Teil der Stützen (59, 63) mehrere Scheitelpunkte (77, 87) aufweist, die auf einem gedachten umschriebenen Kreis (S, T) angeordnet und über diesen verteilt sind, sowie mehrere erste Wandabschnitte (75, 85), die zwischen aufeinanderfolgenden Scheitelpunkten von dem umschriebenen Kreis zurückversetzt verlaufen, wobei vorzugsweise die ersten Wandabschnitte (75, 85) zwischen den aufeinanderfolgenden Scheitelpunkten (77, 87) zumindest teilweise konkav sind, wobei vorzugsweise die Umfangswand (70) von zumindest einem Teil der Stützen (59) im Querschnitt mehrere konvexe zweite Wandabschnitte (76) aufweist, welche die Scheitelpunkte (77) auf dem umschriebenen Kreis enthalten, und wobei vorzugsweise die ersten Wandabschnitte (75) und die zweiten Wandabschnitte (76) entlang des Umfangs des Querschnitts der Umfangswand abwechseln.

12. Set nach einem der vorhergehenden Ansprüche, wobei in der Einbauposition zumindest ein Teil der distalen Enden der Stützen (59), die in die erste Bodenwandhälfte (56) der ersten Regenwasserkiste (51) übergehen, einen Umfang aufweist, der parallel zu dem Umfang einer Eintrittsöffnung (82) in der zweiten Bodenwandhälfte (57) der zweiten Regenwasserkiste (51) verläuft oder diesem zumindest teilweise folgt, oder wobei zumindest ein Teil der distalen Enden der Stützen (63), die in die zweite Bodenwandhälfte (57) der ersten Regenwasserkiste (51) übergehen, einen Umfang aufweist, der parallel zu dem Umfang einer Eintrittsöffnung (72) in der ersten Bodenwandhälfte (56) der zweiten Regenwasserkiste (51) verläuft oder diesem zumindest teilweise folgt.

13. Set nach einem der vorhergehenden Ansprüche, ferner umfassend eine Bodenplatte (30), die eine Bodenfläche des Sets definiert, wobei die Bodenplatte vorzugsweise eine Bodenwand (33) mit mehreren Aussparungen (39, 43) zur Aufnahme der distalen Enden der Stützen (59, 63) der ersten Regenwasserkiste (51) oder der zweiten Regenwasserkiste (51) umfasst.

14. Unterirdische Regenwasserspeichervorrichtung (10), umfassend einen inneren Speicherkörper (20) und eine äußere Schicht (11) um den inneren Speicherkörper, die zusammen ein Regenwasserspeichervorrichtungsvolumen definieren, wobei der innere Speicherkörper (20) mehrere identische Regenwasserkisten (51) umfasst, die eine erste Schicht (22) und eine zweite Schicht (23) auf der ersten Schicht bilden, wobei in der ersten Schicht (22) die Regenwasserkisten (51) nebeneinander angeordnet sind und parallele erste Reihen (24) bilden, und wobei in der zweiten Schicht (23) die Regenwasserkisten (51) nebeneinander angeordnet sind und parallele zweite Reihen (25) bilden, wobei sich die zweiten Reihen (25) über die ersten Reihen (24) erstrecken, wobei die Regenwasserkisten (51) Sets nach einem der vorhergehendenAnsprüche bilden, und wobei die Regenwasserkisten (51) in den zweiten Reihen (25) gegenüber den Regenwasserkisten (51) der ersten Reihen (24) in Reihenrichtung um die Hälfte ihrer Länge versetzt sind, oder wobei in der zweiten Schicht (23) zumindest einige der Regenwasserkisten (52) gegenüber den Regenwasserkisten (51) der ersten Schicht (22) um 90 Grad oder 180 Grad um eine vertikale Achse gedreht sind.

15. Verfahren zum Aufbau einer unterirdischen Regenwasserspeichervorrichtung (10) nach Anspruch 14, wobei das Verfahren die Bereitstellung mehrerer Sets von Regenwasserkisten (51) in der gegenseitigen Transportposition umfasst, die einen Stapel (26) bilden, wobei die ersten Reihen (24) und die zweiten Reihen (25) dadurch gebildet werden, dass wiederholt eine Regenwasserkiste (51) aus dem Stapel (26) entnommen, diese Regenwasserkiste (51) in Reihenrichtungversetzt und diese Regenwasserkiste (51) in der ersten Reihe (24) oder der zweiten Reihe (25) platziert wird.

## Revendications

1. Ensemble comprenant une première caisse d'eau de pluie (51) qui est configurée pour coopérer avec une seconde caisse d'eau de pluie identique pour construire un dispositif souterrain de stockage d'eau de pluie (10) et comprenant en outre ladite seconde caisse d'eau de pluie identique (51), dans lequel la première caisse d'eau de pluie et la seconde caisse d'eau de pluie comprennent chacune une paroi de base (53) et plusieurs supports (59, 63) qui se raccordent à la paroi de base et qui se projettent dans la même direction à partir de la paroi de base, dans lequel les supports ont une extrémité distale pour reposer, et dans lequel les supports sont creux et présentent une ouverture d'entrée (72, 82) à travers la paroi de base (53) au niveau du raccordement avec la paroi de base (53), dans lequel la paroi de base comprend une première moitié de paroi de base (56) et une seconde moitié de paroi de base (57) qui sont consécutives l'une à l'autre dans une direction de longueur de la paroi de base et dans lequel les supports (59, 63) présentent une première répartition sur la première moitié de paroi de base (56) et une seconde répartition sur la seconde moitié de paroi de base (57), dans lequel la première caisse d'eau de pluie (51) présente, dans la coopération avec la seconde caisse d'eau de pluie (51), une position de transport et une position d'installation, dans lequel, en position de transport, la première caisse d'eau de pluie (51) est positionnée directement au-dessus de la seconde caisse d'eau de pluie (51) tandis que les supports (59, 63) sont emboîtés les uns dans les autres via les ouvertures d'entrée (72, 82), et dans lequel, en position d'installation, la première caisse d'eau de pluie (51) est désemboîtée de la seconde caisse d'eau de pluie (51) et translatée sur la moitié de sa longueur par rapport à la seconde caisse d'eau de pluie dans la direction longitudinale de la paroi de base (53), et les supports (59) qui se raccordent à la première moitié de paroi de base (56) de la première caisse d'eau de pluie reposent chacun, par leurs extrémités distales, au moins en partie sur la seconde moitié de paroi de base (57) de la seconde caisse d'eau de pluie, ou les supports (63) qui se raccordent à la seconde moitié de paroi de base (57) de la première caisse d'eau de pluie reposent chacun, par leurs extrémités distales, au moins en partie sur la première moitié de paroi de base (56) de la seconde caisse d'eau de pluie, **caractérisé en ce que**, en position d'installation, les supports (59) qui se raccordent à la première moitié de paroi de base (56) de la première caisse d'eau de pluie (51) présentent, au niveau des extrémités distales, un recouvrement avec les supports (63) qui se raccordent à la seconde moitié de paroi de base (57) de la seconde caisse d'eau de pluie (51), ou les supports (63) qui se raccordent à la seconde moitié de paroi de base (57) de la première caisse d'eau de pluie (51) présentent, au niveau des extrémités distales, un recouvrement avec les supports (59) qui se raccordent à la première moitié de paroi de base (56) de la seconde caisse d'eau de pluie (51).

2. Ensemble selon la revendication 1, dans lequel le recouvrement représente, le long de la circonférence extérieure du support (59, 63), au moins 20 %, de préférence au moins 30 %, idéalement au moins 40 % de la longueur de la circonférence extérieure.

3. Ensemble selon l'une quelconque des revendications précédentes, dans lequel, en position d'installation, les supports (59) qui se raccordent à la première moitié de paroi de base (56) de la première caisse d'eau de pluie (51) reposent à côté ou à proximité des ouvertures d'entrée (82) dans la seconde moitié de paroi de base (57) de la seconde caisse d'eau de pluie (51), ou les supports (63) qui se raccordent à la seconde moitié de paroi de base (57) de la première caisse d'eau de pluie (51) reposent à côté ou à proximité des ouvertures d'entrée (72) dans la première moitié de paroi de base (56) de la seconde caisse d'eau de pluie (51).

4. Ensemble selon l'une quelconque des revendications précédentes, dans lequel, en position d'installation, les supports (59) qui se raccordent à la première moitié de paroi de base (56) de la première caisse d'eau de pluie (51) reposent complètement sur la seconde moitié de paroi de base (57) de la seconde caisse d'eau de pluie (51), ou les supports (63) qui se raccordent à la seconde moitié de paroi de base (57) de la première caisse d'eau de pluie (51) reposent complètement sur la première moitié de paroi de base (56) de la seconde caisse d'eau de pluie (51).

5. Ensemble selon l'une quelconque des revendications précédentes, dans lequel, tant en position de transport qu'en position d'installation, la paroi de base (53) de la première caisse d'eau de pluie (51) s'étend parallèlement à la paroi de base (53) de la seconde caisse d'eau de pluie (51) tandis que les supports (59, 63) sont tous orientés dans la même direction par rapport à la paroi de base (53).

6. Ensemble selon l'une quelconque des revendications précédentes, dans lequel la première distribution des supports (59) sur la première moitié de paroi de base (56) de la première caisse d'eau de pluie (51) diffère de la seconde distribution des supports (63) sur la seconde moitié de paroi de base (57) de la première caisse d'eau de pluie (51).

7. Ensemble selon l'une quelconque des revendications précédentes, dans lequel au moins une partie des supports (63) forme des groupes isolés identiques (62) à une première distance (L6, W6) les uns des autres, dans lequel les supports (63) dans les groupes isolés (62) sont espacés les uns des autres selon une seconde distance qui est inférieure à la première distance (L6, W6), dans lequel, de préférence, la seconde distance est au moins 1,5 fois inférieure que la première distance (L6, W6).

8. Ensemble selon la revendication 7, dans lequel les supports (59) sur la première moitié de paroi de base (56) ou sur la seconde moitié de paroi de base (57) forment les groupes isolés, et les supports (59) sur l'autre parmi la première moitié de paroi de base (56) et la seconde moitié de paroi de base (57) présentent, dans une projection de la première moitié de paroi de base (56) sur la seconde moitié de paroi de base (57), les extrémités distales entre les ouvertures d'entrée (82) des supports (63) des groupes isolés (62).

9. Ensemble selon l'une quelconque des revendications précédentes, dans lequel la paroi de base (53) a un contour rectangulaire, dans lequel, de préférence, la paroi de base (53) présente, dans la direction longitudinale, une longueur (L4) qui est de 1,5 à 2,5 fois, de préférence 2 fois, sa largeur (W4) mesurée transversalement à celle-ci.

10. Ensemble selon l'une quelconque des revendications précédentes, dans lequel les supports (59, 63) comprennent une paroi circonférentielle (70, 80) qui se raccorde à la paroi de base (53) et qui délimite une cavité d'emboîtement, dans lequel, de préférence, la paroi circonférentielle (70, 80) se raccorde à une paroi de fond (73, 83) qui définit l'extrémité distale du support.

11. Ensemble selon la revendication 10, dans lequel la paroi circonférentielle (70, 80) d'au moins une partie des supports (59, 63) présente une section transversale non circulaire ou de type lobé, et/ou dans lequel la section transversale de la paroi circonférentielle (70, 80) d'au moins une partie des supports (59, 63) présente plusieurs sommets (77, 87) qui sont situés sur et répartis sur un cercle circonscrit notionnel (S, T), et plusieurs premières sections de paroi (75, 85) qui s'étendent en retrait par rapport au cercle circonscrit notionnel entre des sommets consécutifs, dans lequel, de préférence, les premières sections de paroi (75, 85) sont au moins partiellement concaves entre les sommets consécutifs (77, 87), dans lequel, de préférence, la paroi circonférentielle (70) d'au moins une partie des supports (59) présente, en section transversale, plusieurs secondes sections de paroi convexes (76) qui contiennent les sommets (77) sur le cercle circonscrit, dans lequel, de préférence, les premières sections de paroi (75) et les secondes sections de paroi (76) alternent le long de la circonférence de la section transversale de la paroi circonférentielle.

12. Ensemble selon l'une quelconque des revendications précédentes, dans lequel, en position d'installation, au moins une partie des extrémités distales des supports (59) qui se raccordent à la première moitié de paroi de base (56) de la première caisse d'eau de pluie (51) présente une circonférence qui s'étend parallèlement à, ou qui suit au moins en partie, la circonférence d'une ouverture d'entrée (82) dans la seconde moitié de paroi de base (57) de la seconde caisse d'eau de pluie, ou au moins une partie des extrémités distales des supports (63) qui se raccordent à la seconde moitié de paroi de base (57) de la première caisse d'eau de pluie (51) présente une circonférence qui s'étend parallèlement à, ou qui suit au moins en partie, la circonférence d'une ouverture d'entrée (72) dans la première moitié de paroi de base (56) de la seconde caisse d'eau de pluie (51).

13. Ensemble selon l'une quelconque des revendications précédentes, comprenant en outre un panneau de fond (30) qui définit une face inférieure de l'ensemble, dans lequel le panneau de fond comprend de préférence une paroi de base (33) avec plusieurs évidements (39, 43) pour recevoir les extrémités distales des supports (59, 63) de la première caisse d'eau de pluie (51) ou de la seconde caisse d'eau de pluie (51).

14. Dispositif souterrain de stockage d'eau de pluie (10) comprenant un corps de stockage interne (20) et une couche externe (11) autour du corps de stockage interne qui, ensemble, définissent un volume du dispositif de stockage d'eau de pluie, dans lequel le corps de stockage interne (20) comprend plusieurs caisses d'eau de pluie identiques (51) qui forment une première couche (22) et une seconde couche (23) sur la première couche, dans lequel, dans la première couche (22), les caisses d'eau de pluie (51) sont positionnées de manière adjacente les unes aux autres et forment des premières rangées parallèles (24), et dans lequel, dans la seconde couche (23), les caisses d'eau de pluie (51) sont positionnées de manière adjacente les unes aux autres et forment des secondes rangées parallèles (25), dans lequel les secondes rangées (25) s'étendent au-dessus des premières rangées (24), dans lequel les caisses d'eau de pluie (51) forment des ensembles selon l'une quelconque des revendications précédentes, et dans lequel, dans les secondes rangées (25), les caisses d'eau de pluie (51) sont décalées par rapport aux caisses d'eau de pluie (51) dans les premières rangées (24) sur la moitié de leur longueur dans la direction de la rangée, ou dans lequel, dans la seconde couche (23), au moins certaines des caisses d'eau de pluie (52) sont tournées par rapport aux caisses d'eau de pluie (51) dans la première couche (22) de 90 degrés ou de 180 degrés autour d'un axe vertical.

15. Procédé de construction d'un dispositif souterrain de stockage d'eau de pluie (10) selon la revendication 14, dans lequel le procédé comprend la fourniture de plusieurs ensembles de caisses d'eau de pluie (51) en position de transport mutuelle formant une pile (26), dans lequel les premières rangées (24) et les secondes rangées (25) sont formées en prenant de manière répétée une caisse d'eau de pluie (51) depuis la pile (26), en translatant cette caisse d'eau de pluie (51) dans la direction de la rangée et en plaçant cette caisse d'eau de pluie (51) dans la première rangée (24) ou la seconde rangée (25).
